# EUROPEAN PATENT APPLICATION

(11) **EP 2 215 911 A1**
(43) Date of publication of application: **11.08.2010**
(21) Application number: 10382005.6
(22) Date of filing: 13.01.2010
(51) Int. Cl.: A22C 11/02

(54) **Braking device for the delivery of the casing of sausages at the end of stuffing tubes**

(30) Priority: 05.02.2009 ES 200900320
(71) Applicant: Lorenzo Noguera, Sagar, 08310 Argentona (ES)
(72) Inventor: Lorenzo Noguera, Sagar, 08310 Argentona (ES)
(74) Representative: Sugrañes Patentes y Marcas

(57) **Abstract**

The invention relates to a braking device for the delivery of the casing of sausages at the end of stuffing tubes, particularly applicable in the stuffing of sausage pieces in stuffing machines, comprising a block formed by two coaxial rings, suitable for receiving the insertion of the open end of the stuffing tube and coupled to one another, between which there is arranged a third elastic and concentric ring compressible by the movement of the first two rings closer together and which performs the braking of the casing, which externally envelops the stuffing tube and passes through the space comprised between the three rings and the outside of the stuffing tube, there being arranged in the inner arris of the front edge of the outer ring of the block of coaxial rings, adjacent to the opening of the stuffing tube, sliding and/or rolling means the outer surface of which forms the outlet of the casing.

## Description

### Technical Field of the Invention.-

The present invention relates to a braking device for the delivery of the casing of sausages at the end of stuffing tubes, particularly applicable in the stuffing of sausage pieces in stuffing machines, comprising a block formed by two coaxial rings, suitable for receiving the insertion of the open end of the stuffing tube and coupled to one another, between which there is arranged a third elastic and concentric ring compressible by the movement of the first two rings closer together and which performs the braking of the casing, which externally envelops the stuffing tube and passes through the space comprised between the three rings and the outside of the stuffing tube.

### Background of the Invention.-

Devices braking the delivery of the casing in automatic stuffing machines are already known, in which the length of each sausage piece is mainly given by the filling pressure of the sausage provided by the stuffing machine, always according to the weight of the sausage piece to be achieved.

These devices are mainly of the aforementioned type and perform the effect of braking the casing of the sausage as a result of the pressure exerted by the third elastic ring thereon, pressing it against the outer surface of the stuffing tube. However, when the diameter of the sausage is of a relatively large magnitude, the pressure exerted by the machine when stuffing makes the sausage piece tend to extend, the length increasing to the detriment of its thickness, which is precisely the opposite result to what is sought.

To counteract this negative effect, the advance of the casing must then be braked to a greater extent by means of a greater tightening of the third ring on the casing, which causes the latter, since it has a large diameter as has already been stated, to bend outwards in a virtually right angle on the edge of the outer block formed by the pair of rings of the device, the friction on said edge increasing and the advance of the sausage piece then being braked, which sausage piece thus does reach the desired length even when the stuffing pressure is greatly increased, with the subsequent risk of breaking, and even of explosion, of the casing.

Multiple embodiments of braking devices for the delivery of the casing of sausages are already known, such as those described in the documents US 4442568 and US 4646386.

However, all of them have the drawback that they are very complicated and expensive and furthermore they do not effectively solve the problem of the breaking of the casing when high stuffing pressures are used.

Document US 5197914 describes an embodiment similar to a device according to the preamble of claim 1.

### Disclosure of the Invention.-

The present invention describes a braking device of the type described which completely eliminates these drawbacks and which allows obtaining sausages without problems whatever the stuffing pressure.

Said device is essentially **characterized in that** in the inner arris of the front edge of the outer ring of the block of coaxial rings, adjacent to the opening of the stuffing tube, there are arranged sliding and/or rolling means the outer surface of which forms the outlet of the casing.

According to another feature of the invention, the sliding and/or rolling means are formed by a plurality of rollers arranged rotating freely about respective axes housed in the arris of the inner front edge of the outer ring of the block and arranged adjacent in a tangential direction to the opening of said block, the outer surface of said rollers determining an outer plane perpendicular to the axis of the block of the rings, which comprises the outlet of the casing.

According to another feature of the invention, the outer plane perpendicular to the axis of the block of the rings, which is tangent to the outer surface of the sliding and/or rolling means and which coincides with the plane of the outlet of the casing, is arranged outside the plane of the front edge of the block of rings and also outside the plane of the opening of the stuffing tube.

The following advantages are achieved as a result of these features of the invention:
- The control of the stuffing pressure is facilitated, which is conventionally very difficult due to the high friction which on many occasions is performed by the arris of the inner front edge of the outer ring of the outer block on the outer face of the casing.
- Overpressure in the sausage and in the casing is prevented when the closing of the clip is performed, which will result in a drastic reduction of the breakings of the casing.
- Less resistant or less strong, and therefore less expensive casings can be used, without them breaking. The use of, for example, artificial casings which when made of collagen also allow obtaining a better curing of the sausage, is therefore accepted.

### Brief Description of the Drawings.-

The attached drawings show, by way of a non-limiting example, an embodiment of the device object of the present invention, in which:
Figure 1 is a schematic elevational sectioned view of a preferred embodiment of the braking device of the invention, placed at the end of a stuffing tube;
Figure 2 shows a front elevational view of the embodiment of Figure 1; and
Figure 3 shows a view similar to that of Figure 1, but during the transverse compression of the sausage piece as indicated by the arrows 15, when the closing of a clip is performed.

### Detailed Description of the Drawings.-

In said drawings it can be seen that the braking device for the delivery of the casing 1 of sausages 6 in question for obtaining sausage pieces 7 in stuffing machines, comprises essentially and in a known manner a block 4 provided with two coaxial rings 5 and 6 attached to one another by means of a thread, which allows them to perform small shifting movements with respect to one another in an axial direction.

The block 4 is suitable for being inserted into the end 2 of a stuffing tube 3 of a stuffing machine and between its two rings 5 and 6 it comprises a third elastic concentric ring 8, compressible by the movement of the first two rings 5 and 6 closer together.

The casing 1 externally envelops the stuffing tube 3 and is arranged in a very long outer storage 16, in which the casing 1 is transversely pleated. At its outer end, corresponding to the stuffing point, the casing 1 passes through the space comprised between the three rings 5, 6 and 8 of the block 4 and the outer surface of the stuffing tube 3 and the pressure of the third elastic ring 8 on the casing 1 against the surface of the tube 3 performs the braking of the casing 1.

According to the invention, in the inner arris of the front edge 9 of the outer ring 5 of the block 4, which is adjacent to the opening 10 of the stuffing tube 3, there are arranged sliding and/or rolling means 11 the outer surface of which determines a tangent plane perpendicular to the stuffing axis which forms the outlet of the casing 1.

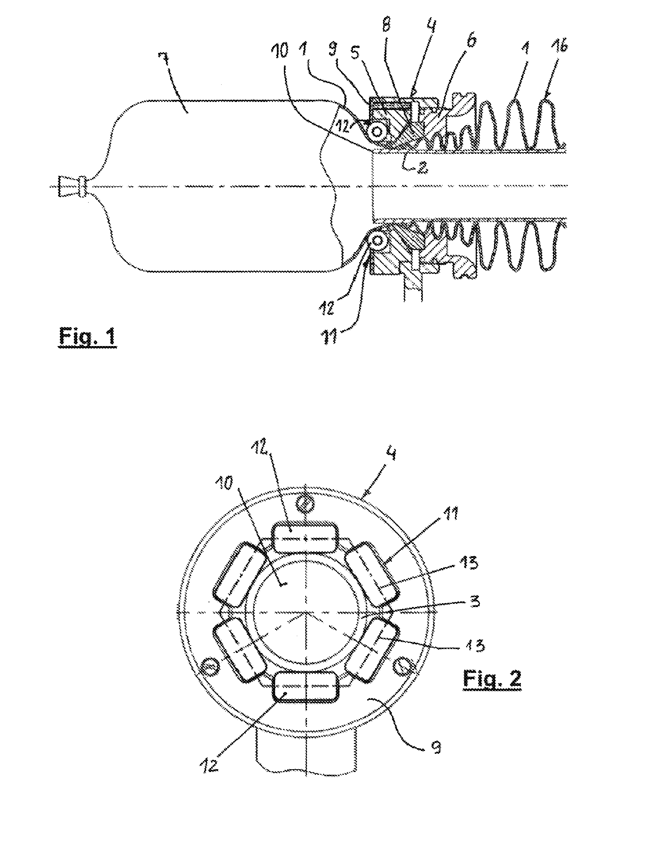

In the preferred embodiment of the invention, depicted in the drawings, said sliding and/or rolling means 11 are formed by a plurality of rollers 12 rotating freely about respective axes 13 schematically depicted in Figure 2. The rollers 12 are housed in a recessed step formed in the arris of the inner front edge 9 of the outer ring 5 of the block 4, being arranged adjacent in a tangential direction to the opening of the block 4. The outer surface of said rollers 12 determines a plane tangent thereto and perpendicular to the axis of the stuffing tube 3, which coincides with the plane of the outlet of the casing 1 and which is arranged outside the front edge 9 of the block of rings and also outside the plane of the opening 10 of the stuffing tube.

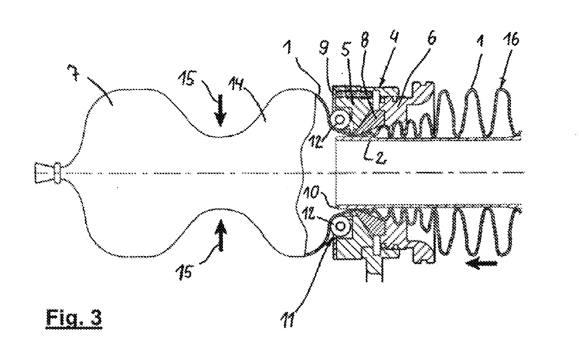

It can be observed in Figures 1 and 3 how the casing 1 is applied under pressure against the sliding means 11, being able to slide thereon without excessive friction. In Figure 3, the overpressure caused by the effect of the closing of the clip in the rear half 14 of the piece 7 being obtained, the casing 1 is applied to a greater extent on the mentioned sliding means 11.

## Claims

1. A braking device for the delivery of the casing (1) of sausages (6) at the end (2) of stuffing tubes (3), particularly applicable in the stuffing of sausage pieces (7) in stuffing machines, comprising a block (4) formed by two coaxial rings (5, 6), suitable for receiving the insertion of the open end of the stuffing tube and coupled to one another, between which there is arranged a third elastic and concentric ring compressible by the movement of the first two rings closer together and which performs the braking of the casing, which externally envelops the stuffing tube and passes through the space comprised between the three rings and the outside of the stuffing tube, **characterized in that** in the inner arris of the front edge (9) of the outer ring of the block of coaxial rings, adjacent to the opening (10) of the stuffing tube, there are arranged sliding and/or rolling means (11) the outer surface of which forms the outlet of the casing.

2. The device according to claim 1, **characterized in that** the sliding and/or rolling means are formed by a plurality of rollers (12) arranged rotating freely about respective axes (13) housed in the arris of the inner front edge (9) of the outer ring (5) of the block (4) and arranged adjacent in a tangential direction to the opening of said block, the outer surface of said rollers determining an outer plane perpendicular to the axis of the block of the rings which coincides with the plane of the outlet of the casing (1).

3. The device according to the previous claims, **characterized in that** the outer plane perpendicular to the axis of the block (4) of the rings, which is tangent to the outer surface of the sliding and/or rolling means (11) and which coincides with the plane of the outlet of the casing, is arranged outside the plane of the front edge (9) of the block of rings and also outside the plane of the opening (10) of the stuffing tube (3).
